# EUROPEAN PATENT APPLICATION

(11) **EP 2 806 580 A1**
(43) Date of publication of application: **26.11.2014**
(21) Application number: 13250061.2
(22) Date of filing: 23.05.2013
(51) Int. Cl.: H04B 7/185, H01Q 1/28

(54) **Data retrieval system in a military aircraft with data stored during a flight and wirelessly transmitted to a ground system after landing at a frequency in the range of 50-330 Ghz or 22-24 GHz**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

An aircraft-side military aircraft data retrieval system and method, comprising: a data storage device (14) located in a military aircraft (2) adapted to, during a flight, store data acquired during the flight; and wireless apparatus (18) adapted to wirelessly transmit, after the aircraft (2) has landed, the stored data to a ground-side data retrieval system (6), at a frequency in a range selected from the following ranges: (i) 50-330 GHz, (ii) 22-24 GHz, for example in the range of 50-70 GHz or more particularly in the range of 55-65 GHz. The data storage device (14) may be located in an electromagnetically sealed bay (8) of the aircraft (2). An antenna (28) of the wireless apparatus (18) may be in a location, for example an undercarriage bay, that is in an open configuration, for a purpose other than retrieving the stored data, after the aircraft (2) has landed.

## Description

### FIELD OF THE INVENTION

The present invention relates to the retrieval of data stored by a military aircraft. The present invention relates in particular to, but is not limited to, retrieval of data acquired and stored by a military aircraft during a flight.

### BACKGROUND

Conventionally, during a mission, data is acquired (and/or updated) and stored by a military aircraft. In some cases, such data is stored in a storage module in an electromagnetically sealed bay of the military aircraft, with the electromagnetically sealed bay having one or more electromagnetically sealed panels. Conventionally, after one or more missions are completed, the data is retrieved by removing or opening the sealed panel and physically accessing the data storage module, which for example may include physically removing the data storage module, or one or more storage media of a storage module, from the aircraft. Removal and then replacement of the sealed panel can lead to increased turnaround and/or maintenance times.

In the field of civilian aircraft, wireless communication of data between an aircraft and ground side equipment, whilst on the ground, is known. See for example US 7,835,734.

### SUMMARY OF THE INVENTION

In a first aspect, the invention provides an aircraft-side military aircraft data retrieval system, comprising: a data storage device located in a military aircraft adapted to, during a flight, store data acquired during the flight; and wireless apparatus adapted to wirelessly transmit, after the aircraft has landed, the stored data to a ground-side data retrieval system, at a frequency in a range selected from the following ranges: (i) 50-330 GHz, (ii) 22-24 GHz.

The frequency may be in the range of 50-70 GHz.

The frequency may be in the range of 55-65 GHz.

The frequency may be in a range selected from the following ranges: (i) 50-70 GHz, (ii) 110-120 GHz, (iii) 170-190 GHz, (iv) 310-330 GHz, (v) 22-24 GHz.

The data storage device may be located in an electromagnetically sealed bay of the aircraft.

The data storage device may be located in an avionics bay of the aircraft.

The data storage device may be located in a first location in the military aircraft; the wireless apparatus may comprise an antenna, at least the antenna being located in a second location in the military aircraft that is different to the first location; the second location may be a location that can have a closed or open configuration and which will be in the closed configuration for at least a majority of the flight and in the open configuration, for a purpose other than retrieving the stored data, after the aircraft has landed; and when the second location is in the open configuration the second location is less electromagnetically sealed than the first location.

The aircraft-side military aircraft data retrieval system may further comprise a transmission element in an external panel of the military aircraft; and the wireless apparatus may be further adapted to wirelessly transmit the stored data to the ground-side data retrieval system via the transmission element.

In a further aspect, the invention provides a ground-side military aircraft data retrieval system, comprising: wireless apparatus adapted to wirelessly receive, at a frequency in a range selected from the following ranges: (i) 50-330 GHz, (ii) 22-24 GHz, data acquired and stored by the aircraft during flight and transmitted after landing by the aircraft using an aircraft-side data retrieval system according to any of the above aspects.

The ground-side military aircraft data retrieval system may be located in a hand-held terminal.

The ground-side military aircraft data retrieval system may further comprise an antenna probe head arrangement adapted to capture the wireless transmission from the transmission element:

In a further aspect, the invention provides a military aircraft data retrieval system, comprising: an aircraft-side military aircraft data retrieval system according to any of the above aspects; and a ground-side military aircraft data retrieval system according to any of the above aspects.

In a further aspect, the invention provides an aircraft-side military aircraft data retrieval method, comprising: during a flight by a military aircraft, storing data acquired during the flight in a data storage device located in the military aircraft; and after the aircraft has landed, wirelessly transmitting the stored data to a ground-side data retrieval system, at a frequency in a range selected from the following ranges: (i) 50-330 GHz, (ii) 22-24 GHz.

In a further aspect, the invention provides a program or plurality of programs arranged such that when executed by a computer system or one or more processors it/they cause the computer system or the one or more processors to operate in accordance with the method of the above aspect.

In a further aspect, the invention provides a machine readable storage medium storing a program or at least one of the plurality of programs according to the above aspect.

### BRIEF DESCRIPTION OF THE DRAWINGS

Figure 1 is a schematic block diagram of an embodiment of a data retrieval system for use with a military aircraft;
Figure 2 is a block diagram showing further details of an aircraft-ground link module and a ground side wireless system of the data retrieval system of Figure 1;
Figure 3 is a schematic cross-sectional illustration (not to scale) showing details of a transmission element of the aircraft-ground link module of Figure 2;
Figure 4 is a schematic cross-sectional illustration (not to scale) showing details of a further embodiment of a data retrieval system for use with a military aircraft;
Figure 5 is a schematic cross-sectional illustration (not to scale) showing details of a further embodiment of a data retrieval system for use with a military aircraft;
Figure 6 is a schematic block diagram of an embodiment of a data retrieval system for use with an aircraft;
Figure 7 is a schematic block diagram of a further embodiment of a data retrieval system for use with an aircraft;
Figure 8 is a process flowchart showing certain steps of an embodiment of a data retrieval process;
Figure 9 is a process flowchart showing certain steps of a further embodiment of a data retrieval process; and
Figure 10 is a process flowchart showing certain steps of a further embodiment of a data retrieval process.

### DETAILED DESCRIPTION

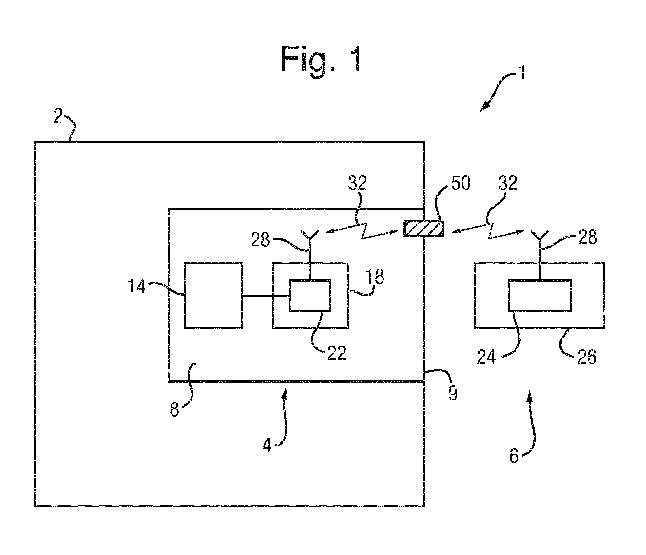

Figure 1 is a schematic block diagram of an embodiment of a data retrieval system 1 for use with a military aircraft 2.

In this embodiment the data retrieval system 1 comprises an aircraft-side data retrieval system 4 and a ground side data retrieval system 6. The aircraft 2 comprises a bay 8. As will be described below, the data to be retrieved is stored in the bay 8. The bay 8 comprises an external aircraft panel 9 that is electromagnetically sealed. By way of example, in this particular embodiment the bay 8 is an avionics bay 8.

In this embodiment the aircraft-side data retrieval system 4 comprises a data storage module 14 and an aircraft wireless system 18, both of which are located in the avionics bay 8. The aircraft wireless system 18 comprises an aircraft-ground link module 22.

In this embodiment the ground side data retrieval system 6 comprises a ground side wireless system 24 located in a hand-held terminal 26.

In this embodiment, each of the aircraft-ground link module 22 and the ground side wireless system 24 comprises a respective antenna 28.

In this embodiment the data storage module 14 is operably coupled via a hard-wired link 130 to the aircraft-ground link module 22. A data retrieval system wireless link 32 is provided between the aircraft-ground link module 22, via its antenna 28, and the ground side wireless system 24 (in particular its antenna 28). In this embodiment the data retrieval system wireless link 32 operates at a frequency of approximately 60GHz, although this need not be the case in other embodiments.

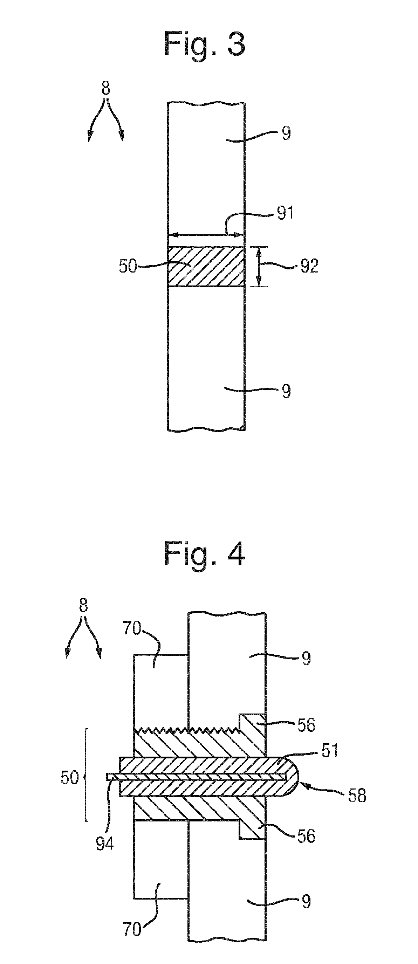

In this embodiment, in order to allow the data retrieval system wireless link 32 to be provided between the aircraft-ground link module 22 and the ground side wireless system 24, despite the presence of the electromagnetically sealed external aircraft panel 9 of the avionics bay 8, a transmission element 50 is provided in the electromagnetically sealed external aircraft panel 9 of the avionics bay 8. Preferably the transmission element 50 is aligned with the antenna 28 of the aircraft-ground link module 22. Further details of the transmission element 50 will be described later below with reference to Figures 3 and 4.

The above arrangement is described in more detail as follows.

In this embodiment, data is acquired on the aircraft during a flight and stored at the data storage module 14. The data storage module 14 may be implemented in any conventional fashion, including one or more processors and one or more storage media. Additionally, in this embodiment, the data storage module 14 4 comprises a conventional input and output arrangement.

In conventional arrangements, after the aircraft lands after a mission, the avionics bay 8 would be opened and a conventional data storage module would be physically coupled to a ground side data retrieval system. In contrast, in this embodiment, the data is retrieved from the data storage module 14 via the hard-wired link 130 and the data retrieval system wireless link 32.

In operation, data acquired or updated during the flight is stored at the data storage module 14. After the aircraft 2 has landed, the hand held terminal 26 is brought into a position that allows adequate wireless transmission/reception between the aircraft-ground link module 22 and the ground side wireless system 24 (via the transmission element 50). Since in this embodiment the wireless frequency employed is approximately 60 GHz, this range is about 5 metres maximum. This provides good security against eavesdropping. Operation over a larger separation between the avionics bay 8 and the hand held terminal 26 is also possible, but this will increase the probability of detection of the wireless data remote from the aircraft.

An advantage that tends to be provided by virtue of the data retrieval system 1 is that there is no need to open any panel of the aircraft just for the sake of allowing wireless connectivity on the ground, since the transmission element allows completion of the data retrieval wireless link through the electromagnetically sealed external aircraft panel 9 of the avionics bay 8. In other embodiments the panel 9 does not fully electromagnetically seal the bay 8, nevertheless the transmission element 50 still provides an advantage of requiring lower power transmission to allow adequate provision of the wireless link compared to if no transmission element 50 were present.

It is noted that the avionics bay 8 does not need to be opened, with consequential delays regarding opening and later re-establishing the electromagnetic sealing, despite this being where the data storage module 14 (and hence the stored data) is located.

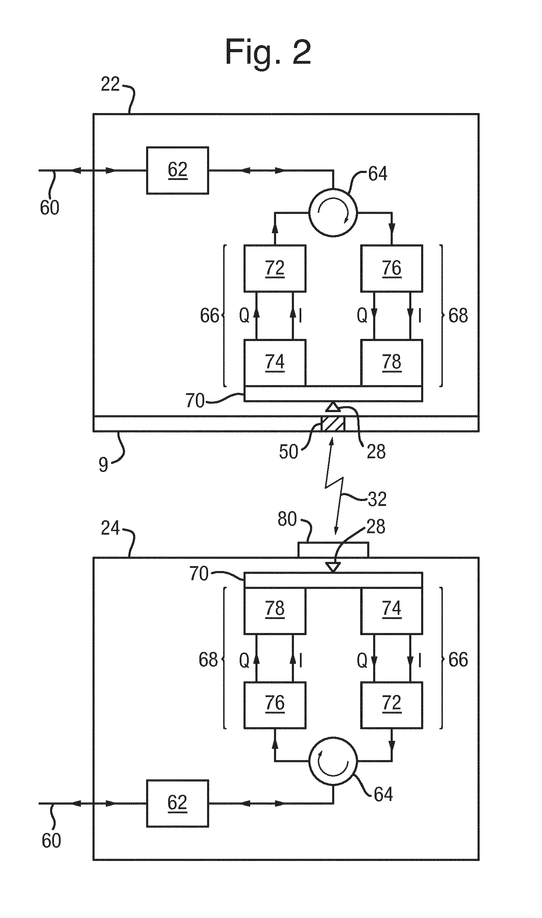

Figure 2 is a block diagram showing further details of the aircraft-ground link module 22 and the ground side wireless system 24. Where applicable the same reference numerals are used to refer to the same elements as shown in Figure 1. Also shown in Figure 2 is the data retrieval system wireless link 32.

In this embodiment the aircraft-ground link module 22 and the ground side wireless system 24 are the same as each other in terms of their electrical elements, as follows. Each comprises a digital input/output 60, a wireless modem 62, a circulator 64, a reception branch 66, a transmission branch 68, a transmission/reception diplexer 70, and an antenna 28 (which in this embodiment is a horn antenna). The reception branch 66 comprises an In-phase and Quadrature (IQ) splitter 72 and a reception module 74 coupled to each other by two separate couplings, one for Q and one for I. The transmission branch 68 comprises an IQ splitter 76 and a transmission module 78 coupled to each other by two separate couplings, one for Q and one for I. A difference between the aircraft-ground link module 22 and the ground side wireless system 24 is that the aircraft-ground link module 22 comprises the transmission element 50 in the electromagnetically sealed panel 9 of the avionics bay 8, whereas the ground side wireless system 24 comprises a conventional window 80 that is transparent to the wireless frequency employed (which in this embodiment is approximately 60GHz). Preferably, the transmission element 50 is aligned with the antenna 28 of the aircraft-ground link module 22. The material used for the transmission element 50 and the window 80 could be the same material offering low transmission loss at the selected transmission frequency.

In this embodiment the wireless modem 62 operates at a frequency of 2.4GHz, but other frequencies are possible, one example being in the range 1 to 6 GHz.

The digital input/output 60 is coupled to the wireless modem 62 using an electrical cable connection. The wireless modem 62 is further coupled to the circulator 64. The circulator 64 is further coupled to the reception branch 66 and the transmission branch 68, more particularly to the IQ splitter 72 of the reception branch 66 and to the IQ splitter 76 of the transmission branch 68. The reception branch 66, more particularly the reception module 74 of the reception branch 66, is coupled to the transmission/reception diplexer 70. The transmission branch 68, more particularly the transmission module 78 of the transmission branch 68, is coupled to the transmission/reception diplexer 70. The transmission/reception diplexer 70 is further coupled to the horn antenna 28. Other types of antenna could also be used to provide different beamwidths and antenna gains.

The data retrieval system wireless link 32 is provided between the respective antennas 28 of the aircraft-ground link module 22 and the ground side wireless system 24, including passing through the transmission element 50 in the electromagnetically sealed panel 9 of the avionics bay 8 and the 60 GHz transparent window 80. These allow the 60GHz signals to pass through the sealed boxes in which 22 and 24 are located in this embodiment.

In this embodiment the digital input/output 60 of the aircraft-ground link module 22 is coupled via the hard-wired link 30 to the digital input/output of the data storage module 14.

In this embodiment the digital input/output 60 of the ground side wireless system 24 is coupled to any suitable end-use arrangement. For example, the digital input/output 60 may be coupled to one or more storage media (not shown) comprised by the hand held terminal 26. The one or more storage media may removable or fixed or one or more of each.

In operation, in this embodiment each of the aircraft-ground link module 22 and the ground side wireless system 24, and the arrangement of Figure 2 as a whole, operates as follows.

At the request of the operator in control of the hand held terminal 26, a command is issued on a data terminal connected to the Ethernet digital input/output 60 of the ground side wireless system 24 to download the stored data from the data storage module 14. This instruction is wirelessly transmitted from the ground side wireless system 24, via the 60 GHz transparent window 80, over the data retrieval system wireless link 32 and via the transmission element 50 to the aircraft-ground link module 22. The wireless signal is demodulated in the wireless modem 62 and connected using the digital input/output interface 60 to the data storage module 14. On reception the data storage module 14 responds to the request to download data and transmits the data to the aircraft-ground link module 22, where the Ethernet data is modulated onto a 60GHz carrier for transmission over the data retrieval system wireless link 32 to the ground side wireless system 24. The hand held data terminal 26 connected to the Ethernet digital input/output 60 then receives the requested data.

The wireless modems 62 are used to convert the Ethernet digital data on port 60 to a suitable modulation for transmission over the wireless links. Coded Orthogonal Frequency Division Multiplexing modulation and coding is one preferred example, in order to alleviate or minimise the impact of the multiple reflections of the wireless signal 32 encountered in the avionics bay 8.

In all the above embodiments the aircraft-ground link module 22 and the ground side wireless system 24 are of the same type, design and specification as each other. However, this need not be the case, and in other embodiments their types and/or design and/or specifications may be different to each other. In other embodiments even when one or more of these characteristics are the same, they may be different to those described above. Examples of different possibilities include the following.

In the above embodiments the input/output 60 is Ethernet digital signals providing a bi-directional transmission path for both data and handshaking for acknowledging receipt of a data packet. In other embodiments, a simplified single direction transmission system may be implemented with transmission from the data storage module 14 to the hand held terminal 26. The data download transmission would be initiated by a different method (any suitable conventional method) compared to that described above as the initial request from the hand held terminal 26 to the data storage module 14 would not be supported with a uni-directional link.

Further details of the transmission element 50 will now be described with reference to Figures 3 and 4.

Figure 3 is a schematic cross-sectional illustration (not to scale) showing further details of the transmission element 50 of this embodiment. Where applicable the same reference numerals are used to refer to the same elements as shown in Figures 1 and 2. In this embodiment the transmission element 50 is a dielectric filled hole 50. A hollow hole is provided in the electromagnetically sealed panel 9 of the avionics bay 8 by any suitable process. For example an existing panel may have a hole drilled in it as a retro-fit process, or a panel may be initially manufactured with a hole in it. In this embodiment the hole has a circular cross-section, but this need not be the case in other embodiments. The dielectric material fills the hole to provide the dielectric filled hole 50. The dielectric material filling may be provided by any suitable process. For example, a suitable dielectric material may be used to amorphously fill the hole. Another possibility, for example, is that a sub-assembly comprising non-dielectric material with a dielectric filled hole therein may be provided for inserting and filling a larger second hole provided in the panel.

Any suitable dielectric material (with corresponding dielectric constant value) may be used for the filling of the dielectric filled hole 50. For example, a preferred range of dielectric constant values is 2 to 2.4. In this embodiment, the material used in the dielectric filled hole 50 is either polypropropylene or PTFE which have a dielectric constant value of 2.2 to 2.36 and 2.1 respectively.

The dimensions of the dielectric filled hole 50 are preferably selected in terms of satisfying a trade-off between acceptable or desired levels of transmission through the dielectric filled hole 50 of the data download, compared to unduly high leakage through the dielectric filled hole 50 of other signals and frequencies. In this embodiment, the length (Indicated in Figure 3 by reference numeral 91) of the hole is 10mm (typical of an avionics bay door 9 thickness) and the diameter (Indicated in Figure 3 by reference numeral 92) of the hole is 5mm. An advantage of the use in this embodiment of a frequency of approximately 60GHz is that for a given performance the dielectric filled hole 50 may be of relatively small diameter 92, i.e. 5mm being a wavelength at 60 GHz. In particular, a relatively low insertion loss is provided by use of such a small diameter at the frequency of approximately 60GHz, but lower frequency signals suffer a much bigger insertion loss. For use over the 55 to 65GHz frequency range a preferred range of the diameter 92 of the dielectric filled hole 50 is 3mm to 5mm. At 55Ghz a circular waveguide has a cut-off diameter of 1.6mm. Hence for operation at 55GHz a hole diameter of 3 to 5mm is one preferred range.

In this embodiment, the length 91 of the dielectric filled hole 50 (and in particular the length 91 of the dielectric filling in any provided initial hole) is the same as the thickness of the electromagnetically sealed panel 9 of the avionics bay 8. However, this need not be the case, and in other embodiments the length 91 of the dielectric filled hole 50 (and in particular the length 91 of the dielectric filling in any provided initial hole) is different to the thickness of the electromagnetically sealed panel 9 of the avionics bay 8.

In further embodiments, the dielectric filled hole 50 is provided as a central part of a modified fixing bolt. In more detail, a fixing bolt used for fixing the electromagnetically sealed panel 9 of the avionics bay 8 to the aircraft 2, for example to an internal metallic bulkhead of the aircraft 2, is modified to have a hollowed out axial core that is then filled with dielectric material to provide the dielectric filled hole when the bolt is bolted through the panel 9 and into the metallic bulkhead. This way of providing the dielectric filled hole avoids the need to add any new holes to the panel 9, and is particularly convenient when providing a retro-fit.

In some circumstances the diameter of an available or desired fixing bolt may lead to the dielectric filled hole not being able to have as large a diameter as desired for the frequency being used, e.g. for operation at 55GHz or above a hole diameter of greater than 1.6mm would typically be required. In further embodiments this problem is alleviated by instead implementing the transmission element 50 in the form of a coaxial transmission line assembly 50 that includes the body of a metal (or other conducting material) bolt.

Figure 4 is a schematic cross-sectional illustration (not to scale) showing further details of such a further embodiment (i.e. one where the transmission element 50 is a coaxial transmission line assembly 50). Where applicable the same reference numerals are used to refer to the same elements as shown in Figures 1 to 3.

In this embodiment, a fixing bolt 56 is used as one of a plurality of fixing bolts that are used to fix the electromagnetically sealed panel 9 to a metallic bulkhead 70 of the aircraft 2. The fixing bolt 56 has a hollowed out coaxial centre into which is provided a conducting transmission line 94 surrounded by dielectric material sleeve 51. The transmission line 94 is made of a suitable conducting material, for example copper. In this embodiment the dielectric material sleeve 51 is made of PTFE.

In this embodiment, the metallic bulkhead 70 is earthed, and hence in operation the bolt 56 is earthed. The bolt 56, dielectric material 51 and transmission line 94 in combination provide a coaxial transmission line assembly 50.

The coaxial transmission line assembly 50 can be manufactured in any suitable manner. One example is to modify a conventional fixing bolt by drilling out (or otherwise removing) a central part of the bolt diameter and then inserting the dielectric material sleeve 51 and the transmission line 94. Another example is to initially manufacture a bolt with the dielectric material 51 and the transmission line 94 in it to begin with.

The dimensions of the dielectric material sleeve 51 and the transmission line 94, and the dielectric constant of the dielectric material of the dielectric material sleeve 51, are selected to provide a desired transmission line impedance. By way of example, in this embodiment the dimensions and dielectric constant values are: the diameter of the hole in the metal fixing bolt 56 is 3.4 mm, the diameter of the transmission line 94 is 1 mm, and the dielectric material sleeve 51 is made of PTFE with a dielectric constant of 2.1 This provides a transmission line impedance of 50 Ohms.

In this embodiment the end of the transmission line 94 facing the avionics bay 8 is arranged to provide a desired level of coupling by protruding from the end of the bolt 56 and from the end of the dielectric material sleeve 51. However, this need not be the case, and in other embodiments there may be no protrusion, or other arrangements for improving coupling may be provided.

In this embodiment the end of the transmission line 94 external to the aircraft 2 protrudes from the end of the bolt 56 by a length of 1.5mm, thereby providing (being a quarter wavelength for frequency of 60 GHz) a monopole antenna, thereby providing a wider beamwidth and higher transmission efficiency. However, this need not be the case, and in other embodiments the end of the transmission line 94 external to the aircraft 2 may be arranged differently, for example flush with the head of the bolt 56, thereby advantageously tending to reduce the risk of mechanical damage. Returning to the embodiment shown in Figure 4, in order to mechanically protect the 1.5mm of transmission line 94 protruding from the bolt 56, the dielectric material sleeve 51 extends to form a hemispherical dome 58 (or other shaped) protective layer, However, this need not be provided, and in other embodiments no mechanical protection is provided.

Returning to the embodiment of Figure 3, in yet further embodiments, instead of implementing the transmission element 50 as a dielectric filled hole 50, the transmission element 50 may be implemented as a coaxial transmission line assembly 50 provided in a hole in the electromagnetically sealed panel 9 of the avionics bay 8. In such embodiments, the outer conductor of the coaxial transmission line assembly 50 may be provided by any suitable conducting part, i.e. not necessarily a bolt, that is suitably earthed by some means.

In the above embodiments, relatively narrow beams are emitted from the transmission element 50. Also, the transmission element 50 has relatively small physical areas from where the emission takes place. In further embodiments, this small area is made use of to alleviate any practical disadvantages of narrow beam emissions and/or to reduce the required power transmission levels.

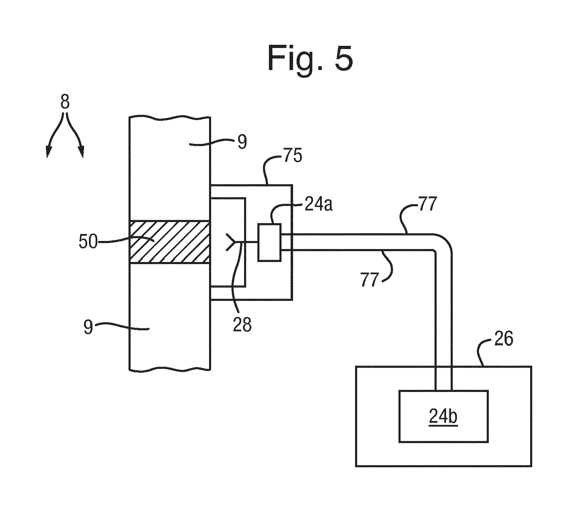

Figure 5 is a schematic cross-sectional illustration (not to scale) showing further details of such a further embodiment. Where applicable the same reference numerals are used to refer to the same elements as shown in Figures 1 to 4.

In such further embodiments (see for example Figure 5), an antenna probe head 75 is provided as part of the ground side data retrieval system 6 to capture emissions from the transmission element 50, by placing the antenna probe head 75 over the end of the transmission element 50. Use of the antenna probe head 75 advantageously captures the emission and does so in a way that does not need careful alignment of direction by an operator. Further details of the antenna probe head 75 of this embodiment are as follows.

The elements and functionality of the ground side wireless system 24 are distributed between a probe head module 24a and a hand held terminal module 24b. The probe head module 24a is located in the antenna probe head 75. The hand held terminal module 24b is located in the hand held terminal 26.

The probe head module 24a includes the antenna 28, the transmission/reception diplexer 70, the reception module 74, and the transmission module 78. The hand held terminal module 24b includes the transmit IQ splitter 76, the receive IQ splitter 72, the circulator 64, the wireless modem 62, and the digital input/output 60. Two coaxial electrical cables 77 are used to operatively couple the probe head module 24a to the lower frequency functions of the hand held terminal module 24b.

It will be appreciated that in other embodiments other antenna probe heads may be used instead, differing over the above described one, for example, as follows. In other embodiments a more compact version of the antenna probe head may include the antenna 28, transmission/reception diplexer 70 and the transmit amplifier of the transmission module 78 and the low noise receive amplifier of the reception module 74. Two coaxial cables or optical fibre link may be used to interface the transmit and receive signals with the other functions of the transmit and receive modules 78 and 74 located in the ground side wireless system 24.

The antenna probe head 75 may be of physical structure that facilitates easy and efficient placement against the outer surface of the panel in which the transmission element 50 is provided. In some further embodiments, this may advantageously include having a structure that enables the antenna probe head 74 to be easily fixed onto and/or held in place on the outer surface of the panel in a desired position, for example by having a suction grip facility. In some further embodiments, additionally or instead, the outer surface of the panel may be provided with a marking or other indication or guide showing an operator where the antenna probe head should be fixed to the aircraft.

In the above embodiments the transmission element 50 is either a dielectric filled hole or a coaxial transmission line assembly. However, in other embodiments, the transmission element may be implemented in other ways, whilst still achieving a tendency to reduce the transmission loss of the wireless signal that would occur due to passing through the electromagnetically sealed panel 9. For example, transmission line embodiments, or embodiments employing a waveguide, may be implemented.

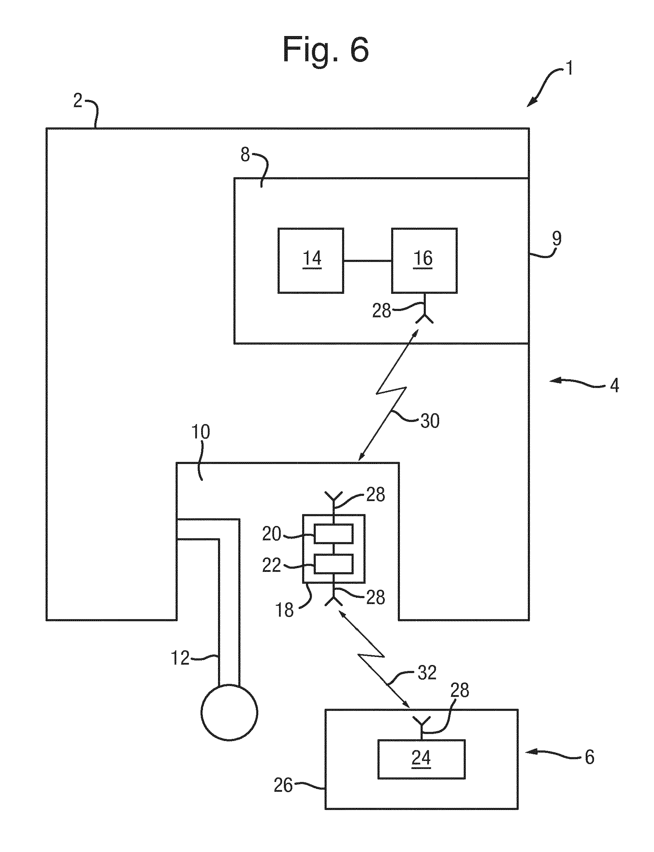

Figure 6 is a schematic block diagram of a further embodiment of a data retrieval system 1 for use with a military aircraft 2. Where applicable the same reference numerals are used to refer to the same elements as shown in Figures 1 to 5.

In this embodiment the data retrieval system 1 comprises an aircraft-side data retrieval system 4 and a ground side data retrieval system 6.

In this embodiment the aircraft 2 comprises an undercarriage bay 10 and a further bay 8. As will be described below, the data to be retrieved is stored in the further bay 8.The further bay 8 comprises an external aircraft panel 9 that is electromagnetically sealed. By way of example, in this particular embodiment the further bay 8 is an avionics bay 8.

The undercarriage bay 10 has an external panel 9 that is electromagnetically sealed when the undercarriage bay 10 is closed. In Figure 6 the aircraft 2 is on the ground with the undercarriage bay 10 open so that its undercarriage 12 is effective. This is the primary reason the undercarriage bay 10 has been opened. However, as will be described in more detail below, use is made of the secondary aspect that as a result of being open, the undercarriage bay 10 is no longer electromagnetically sealed.

In this embodiment the aircraft-side data retrieval system 4 comprises a data storage module 14 and an avionics bay wireless system 16. The data storage module 14 and the avionics bay wireless system 16 are operably coupled to each other and both are located in the avionics bay 8.

In this embodiment the aircraft-side data retrieval system 4 further comprises an undercarriage bay wireless system 18 located in the undercarriage bay 10. The undercarriage bay wireless system 18 comprises an undercarriage bay wireless bridge module 20 and an undercarriage bay aircraft-ground link module 22. The undercarriage bay wireless bridge module 20 and the undercarriage bay aircraft-ground link module 22 are operably coupled to each other.

In this embodiment the ground side data retrieval system 6 comprises a ground side wireless system 24 located in a hand-held terminal 26.

In this embodiment, each of the avionics bay wireless system 16, the undercarriage bay wireless bridge module 20, the undercarriage bay aircraft-ground link module 22, and the ground side wireless system 24 comprises a respective antenna 28. The avionics bay wireless system 16 and the undercarriage bay wireless bridge module 20 are operably coupled together by a wireless bridge link 30 provided via their respective antennas 28. The undercarriage bay aircraft-ground link module 22 and the ground side wireless system 24 are operably coupled together by a data retrieval system wireless link 32 provided via their respective antennas 28.

The above arrangement is described in more detail as follows.

In this embodiment, data is acquired on the aircraft 2 during a flight and stored at the data storage module 14. The data storage module 14 may be implemented in any conventional fashion, including one or more processors and one or more storage media. Additionally, in this embodiment, the data storage module 14 comprises a conventional input and output arrangement.

The data storage module 14 is operably coupled (in this embodiment via a hard-wired link) to the avionics bay wireless system 16. In conventional arrangements, after the aircraft lands after a mission, the avionics bay 8 would be opened and a conventional data storage module would be physically coupled to a ground side data retrieval system. In contrast, in this embodiment, a wireless link is established between the data storage module 14 and a ground side data retrieval system 6 (the latter comprises the hand held terminal 26 in this embodiment), and the data is retrieved from the data storage module 14 over the wireless link. In this embodiment, the wireless link comprises a chain comprising three wireless nodes. The first node is the avionics bay wireless system 16.

The second node is the undercarriage bay wireless system 18, which is located in the undercarriage bay 10. A wireless bridge link 30 is provided between the avionics bay wireless system 16, via its antenna 28, and the undercarriage bay wireless bridge module 20 (in particular its antenna 28) of the undercarriage bay wireless system 18. In this embodiment the wireless bridge link 30 operates at a frequency of approximately 60GHz, although this need not be the case in other embodiments.

The undercarriage bay wireless bridge module 20 is operably coupled (in this embodiment via a hard-wired link) to the undercarriage bay aircraft-ground link module 22.

The third node is the ground side wireless system 24, which is located in the hand held terminal 26. A data retrieval system wireless link 32 is provided between the undercarriage bay aircraft-ground link module 22, via its antenna 28, and the ground side wireless system 24 (in particular its antenna 28). In this embodiment the data retrieval system wireless link 32 operates at a frequency of approximately 60GHz, although this need not be the case in other embodiments.

In operation, data acquired or updated during the flight is stored at the data storage module 14. After the aircraft 2 has landed, the hand held terminal 26 is brought into a position that allows adequate wireless transmission/reception between the undercarriage bay aircraft-ground link module 22 and the ground side wireless system 24. Since in this embodiment the wireless frequency employed is approximately 60 GHz, at which value there is relatively high atmospheric attenuation, this range is about 5 metres maximum. This provides good security against eavesdropping.

The undercarriage bay 10 is an example of a part of the aircraft that will normally be in a closed state during most of the flight, thereby typically providing part of an in-flight sealed wireless barrier, but which is in an opened state for other reasons after the aircraft has landed.

Consequently, one advantage that tends to be provided by virtue of locating the last aircraft-side node of the wireless chain in such a part of the aircraft is that the provision of the data retrieval system does not affect the wireless containment properties of the aircraft in flight (i.e. the external electromagnetic sealing is not interrupted during flight, including not at all during the whole flight for the avionics bay, and for the undercarriage bay interruption only occurring close to landing when the undercarriage bay is opened in preparation for landing).

Another advantage that tends to be provided by virtue of locating the last aircraft-side node of the wireless chain in such a part of the aircraft is that there is no need to open any panel of the aircraft just for the sake of allowing higher wireless connectivity on the ground, since the undercarriage bay is already open (i.e. the extent to which wireless transmission from the undercarriage bay will be attenuated is reduced by virtue of the bay being open). For example, it is noted that the avionics bay 8 does not need to be opened, with consequential delays regarding opening and later re-establishing, the electromagnetic sealing, despite this being where the data storage module 14 (and hence the stored data) is located.

The avionics bay wireless system 16 and the undercarriage bay wireless bridge module 20 together provide a wireless bridge (in particular the wireless bridge link 30) enabling data to be passed between the data storage module 14 and the undercarriage bay aircraft-ground link module 22. An advantage of operably coupling the data storage module 14 and the undercarriage bay aircraft-ground link module 22 together in this way (i.e. by provision of a wireless bridge) that tends to be provided is that there is no need to provide a hard-wired link, avoiding for example a need to undermine the electromagnetic integrity of the avionics bay 8 that may have particularly high levels of integrity of sealing of its enclosure.

In this embodiment the undercarriage bay aircraft-ground link module 22 is the same as the aircraft-ground link module 22 of the embodiments described above with reference to Figures 1 to 5, except that the transmission element 50 is replaced by a 60GHz transparent window. Also, in this embodiment, the ground side wireless system 24 is the same as that described above with reference to Figures 1 to 5.

The data retrieval system wireless link 32 is provided between the respective antennas 28 of the undercarriage bay aircraft-ground link module 22 and the ground side wireless system 24, including passing through the respective 60 GHz transparent windows 80. These allow the 60GHz signals to pass through the sealed boxes in which 22 and 24 are located in this embodiment.

In this embodiment the Ethernet digital input/output 60 of the undercarriage bay aircraft-ground link module 22 is coupled (over a hard wired link) to an Ethernet digital input/output of the undercarriage bay wireless bridge module 20.

In this embodiment the Ethernet digital input/output 60 of the ground side wireless system 24 is coupled to any suitable end-use arrangement. For example, the Ethernet digital input/output 60 may be coupled to one or more storage media (not shown) comprised by the hand held terminal 26. The one or more storage media may removable or fixed or one or more of each.

In operation, in this embodiment the undercarriage bay aircraft-ground link module 22 and the ground side wireless system 24 operate in combination in the same way as the aircraft-ground link module 22 and the ground side wireless system 24 of the embodiments described above with reference to Figures 1 to 5.

In the above embodiments, the data storage module 14 and the undercarriage bay wireless system 18 are operably coupled together by provision of the above described wireless bridge. However, this need not be the case, and in other embodiments the data storage module 14 and the undercarriage bay aircraft-ground link module 22 may be coupled together by provision of any other suitable type of link or operable coupling. For example, they may be coupled together by provision of one or more hard-wired links.

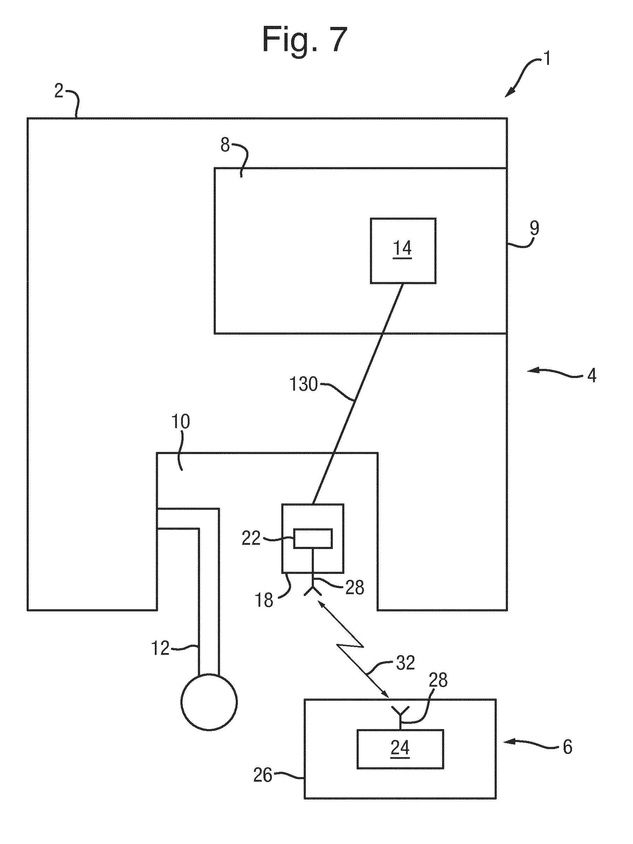

Figure 7 is a schematic block diagram of one such further embodiment of a data retrieval system 1 for use with the aircraft 2. Except where stated otherwise below or where consequently not possible/applicable, the data retrieval system 1 of this further embodiment (Figure 7) comprises the same elements, operating the same way, as described for the above embodiments with reference to Figure 6 (and where applicable the same reference numerals are used in Figure 7 to refer to the same elements as shown in Figures 1 to 6).

In this embodiment the data retrieval system 1 comprises an aircraft-side data retrieval system 4 and a ground side data retrieval system 6.

In this embodiment the aircraft 2 comprises an undercarriage bay 10 and a further bay 8. As will be described below, the data to be retrieved is stored in the further bay 8.The further bay 8 comprises an external aircraft panel 9 that is electromagnetically sealed. By way of example, in this particular embodiment the further bay 8 is an avionics bay 8.

The undercarriage bay 10 has an external panel 9 that is electromagnetically sealed when the undercarriage bay 10 is closed. In Figure 7 the aircraft 2 is on the ground with the undercarriage bay 10 open so that its undercarriage 12 is effective. This is the primary reason the undercarriage bay 10 has been opened. However, as will be described in more detail below, use is made of the secondary aspect that as a result of being open, the undercarriage bay 10 is no longer electromagnetically sealed.

In this embodiment the aircraft-side data retrieval system 4 comprises a data storage module 14 located in the avionics bay 8.

In this embodiment the aircraft-side data retrieval system 4 further comprises an undercarriage bay wireless system 18 located in the undercarriage bay 10. The undercarriage bay wireless system 18 comprises an undercarriage bay aircraft-ground link module 22.

In this embodiment the ground side data retrieval system 6 comprises a ground side wireless system 24 located in a hand-held terminal 26.

In this embodiment, each of the undercarriage bay aircraft-ground link module 22 and the ground side wireless system 24 comprises a respective antenna 28.

In this embodiment the data storage module 14 is operably coupled via the hard-wired link 130 to the undercarriage bay aircraft-ground link module 22, which is located in the undercarriage bay 10. A data retrieval system wireless link 32 is provided between the undercarriage bay aircraft-ground link module 22, via its antenna 28, and the ground side wireless system 24 (in particular its antenna 28). In this embodiment the data retrieval system wireless link 32 operates at a frequency of approximately 60GHz, although this need not be the case in other embodiments.

The above arrangement is described in more detail as follows.

In this embodiment, data is acquired on the aircraft 2 during a flight and stored at the data storage module 14. The data storage module 14 may be implemented in any conventional fashion, including one or more processors and one or more storage media. Additionally, in this embodiment, the data storage module 14 comprises a conventional input and output arrangement.

In conventional arrangements, after the aircraft lands after a mission, the avionics bay 8 would be opened and a conventional data storage module would be physically coupled using an Ethernet digital cable connection to a ground side data retrieval system. In contrast, in this embodiment, the data is retrieved from the data storage module 14 via the hard-wired link 130 and the data retrieval system wireless link 32.

In operation, data acquired or updated during the flight is stored at the data storage module 14. After the aircraft 2 has landed, the hand held terminal 26 is brought into a position that allows adequate wireless transmission/reception between the undercarriage bay aircraft-ground link module 22 and the ground side wireless system 24. Since in this embodiment the wireless frequency employed is approximately 60 GHz, this range is about 5 metres maximum. This provides good security against eavesdropping.

The undercarriage bay 10 is an example of a part of the aircraft that will normally be in a closed state during most of the flight, thereby typically providing part of an in-flight sealed wireless barrier, but which is in an opened state for other reasons after the aircraft has landed. Consequently, one advantage that tends to be provided by virtue of locating the last aircraft-side node of the wireless chain in such a part of the aircraft is that the provision of the data retrieval system has a reduced or minimised extent of lowering the wireless containment properties of the aircraft in flight. Another advantage that tends to be provided by virtue of locating the last aircraft-side node of the wireless chain in such a part of the aircraft is that there is no need to open any panel of the aircraft just for the sake of allowing wireless connectivity on the ground, since the undercarriage bay is already open (i.e. the extent to which wireless transmission from the undercarriage bay will be attenuated is reduced by virtue of the bay being open). For example, it is noted that the avionics bay 8 does not need to be opened, with consequential delays regarding opening and later re-establishing, the electromagnetic sealing, despite this being where the data storage module 14 (and hence the stored data) is located.

In this embodiment the undercarriage bay aircraft-ground link module 22 and the ground side wireless system 24 are the same as described above with reference to Figure 6.

In this embodiment the Ethernet data input/output 60 of the undercarriage bay aircraft-ground link module 22 is coupled via the hard-wired link 30 to the Ethernet data input/output of the data storage module 14.

In this embodiment the Ethernet data input/output 60 of the ground side wireless system 24 is coupled to any suitable end-use arrangement. For example, the Ethernet input/output 60 may be coupled to one or more storage media (not shown) comprised by the hand held terminal 26. The one or more storage media may removable or fixed or one or more of each.

In the above embodiments described with reference to Figures 6 and 7, an aircraft-ground link module 22 is located in the undercarriage bay, i.e. the undercarriage bay is the selected bay for use as a bay or other enclosure that will give less attenuation after it is open, and where that bay will also be open or opened, when the aircraft 2 is on the ground, for other reasons. However, in other embodiments, a different bay or enclosure of the aircraft 2 other than the undercarriage bay 10 may be employed (as a bay that will give less attenuation after it is open), where that other bay will also be open or opened, when the aircraft 2 is on the ground, for other reasons.

In the above embodiments described with reference to Figures 6 and 7, the undercarriage bay aircraft-ground link' module 22 and the ground side wireless system 24 are of the same type, design and specification as each other. However, this need not be the case, and in other embodiments their types and/or design and/or specifications may be different to each other. In other embodiments even when one or more of these characteristics are the same, they may be different to those described above. Examples of different possibilities include the following.

In the above embodiments the input/output 60 is Ethernet digital signals providing a bi-directional transmission path for both data and handshaking for acknowledging receipt of a data packet. In other embodiments, a simplified single direction transmission system may be implemented with transmission from the data storage module 14 to the hand held terminal 26. The data download transmission would be initiated by a different method (any suitable conventional method) compared to that described above as the initial request from the hand held terminal 26 to the data storage module 14 would not be supported with a uni-directional link.

In those of the above embodiments that include a wireless bridge, the wireless elements providing the wireless bridge, i.e. the avionics bay wireless system 16 and the undercarriage bay wireless system 18, are both of the same type, design and specification as each other and also of the same type, design and specification as the undercarriage bay aircraft-ground link module 22 and the ground side wireless system 24. However, this need not be the case, and in other embodiments one or more of these characteristics of one or both of the wireless elements providing the wireless bridge may be different to each other and/or different to those of one or both of the undercarriage bay aircraft-ground link module 22 and the ground side wireless system 24. In the above embodiments, a 60GHz transmission frequency has been used for the wireless bridge link 30 and the data retrieval system wireless link 32. In other embodiments a different frequency may be used for the wireless bridge link 30 compared to the data retrieval system wireless link 32. Also different modulation techniques may be adopted for the data retrieval system wireless link 32 compared to the wireless bridge link 30, for example making use of any reduced multipath conditions in the undercarriage bay 10 compared to the avionics bay 8.

More generally, by use of any of any appropriate arrangements of apparatus, including the different embodiments of apparatus described above and including the options and alternative possibilities discussed in relation thereto, the following embodiments of data retrieval processes may be implemented.

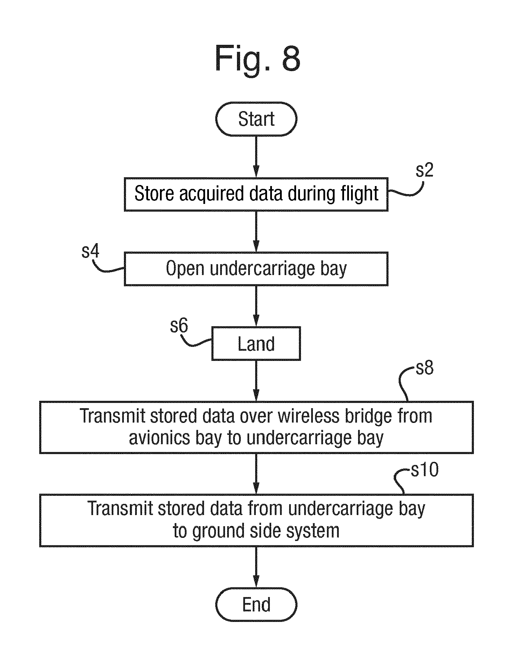

Figure 8 is a process flowchart showing certain steps of an embodiment of a data retrieval process.

At step s2, acquired data is stored in the avionics bay 8 during flight. In this embodiment the data is stored at the data storage module 14.

At step s4, during the approach for landing, the undercarriage bay 10 is opened. This reduces the extent to which later wireless transmission from the undercarriage bay 10 will be attenuated. In this embodiment this step is of course performed before the aircraft 2 lands. However, in other embodiments, a different bay or enclosure of the aircraft 2 other than the undercarriage bay 10 will be employed (as a bay that will give less attenuation after it is open), where that other bay will also be open or opened when the aircraft 2 is on the ground, for other reasons. If this is a bay that does not need to be opened until after the aircraft 2 is on the ground, then a step equivalent to s4 (i.e. opening the relevant bay) may instead be performed after landing rather than before (i.e. after step s6).

Returning to the embodiment shown in Figure 8, at step s6 the aircraft 2 lands.

Thereafter, when the aircraft 2 is stationery, steps s8 and s10 are performed as follows.

At step s8, the stored data is transmitted over a wireless bridge link 30 provided by a wireless bridge from the avionics bay 8 to the undercarriage bay 10. In this embodiment this step is performed by the avionics bay wireless system 16 and the undercarriage bay wireless system 18, but this need not be the case, and in other embodiments other apparatus may be used.

At step s10, the stored data is transmitted from the undercarriage bay 10 to a ground side system. In this embodiment this step is performed by the undercarriage bay wireless system 18 and, as the ground side system, the ground side wireless system 24. However, this need not be the case, and in other embodiments other apparatus may be used.

In other embodiments, step s8 and/or step s10 may instead be performed when the aircraft 2 is taxiing, or may instead be performed over a period of time in which for part of that period of time the aircraft 2 is stationery and for part of that period of time the aircraft 2 is taxiing.

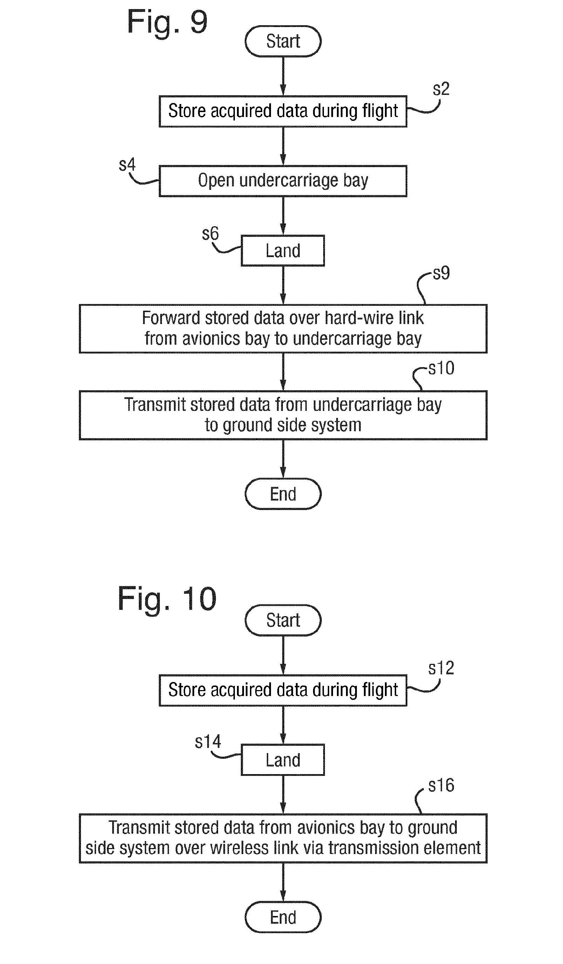

Figure 9 is a process flowchart showing certain steps of a further embodiment of a data retrieval process.

At step s2, acquired data is stored in the avionics bay 8 during flight. In this embodiment the data is stored at the data storage module 14.

At step s4, the undercarriage bay is opened. This reduces the extent to which later wireless transmission from the undercarriage bay 10 will be attenuated. The discussion above regarding step s4 with reference to Figure 8 (regarding alterative bays and whether before or after landing) also applies to step s4 in this embodiment.

At step s6 the aircraft 2 lands.

Thereafter, when the aircraft 2 is stationery, steps s9 and s10 are performed as follows.

At step s9, the stored data is forwarded from the avionics bay 8 to the undercarriage bay 10 over a hard-wired link 130. In this embodiment this step is performed by the data storage module 14 and the undercarriage bay wireless system 18 via the hard-wired link 130, but this need not be the case, and in other embodiments other apparatus may be used.

At step s10, the stored data is transmitted from the undercarriage bay 10 to a ground side system. In this embodiment this step is performed by the undercarriage bay wireless system 18 and, as the ground side system, the ground side wireless system 24. However, this need not be the case, and in other embodiments other apparatus may be used.

In other embodiments, step s9 and/or step s10 may instead be performed when the aircraft 2 is taxiing, or may instead be performed over a period of time in which for part of that period of time the aircraft 2 is stationery and for part of that period of time the aircraft 2 is taxiing.

Figure 10 is a process flowchart showing certain steps of an embodiment of a data retrieval process.

At step s12, acquired data is stored in the avionics bay 8 during flight. In this embodiment the data is stored at the data storage module 14.

At step s14, the aircraft 2 lands.

Thereafter, when the aircraft 2 is stationery, step s16 is performed as follows.

At step s16, the stored data is transmitted via the transmission element 50 over the data retrieval system wireless link 32 from the avionics bay 8 to a ground side system 6. In this embodiment this step is performed by the aircraft wireless system 18 and, as the ground side system, the ground side wireless system 24. However, this need not be the case, and in other embodiments other apparatus may be used.

In other embodiments, step s16 may instead be performed when the aircraft 2 is taxiing, or may instead be performed over a period of time in which for part of that period of time the aircraft 2 is stationery and for part of that period of time the aircraft 2 is taxiing.

In the above embodiments the wireless links are provided at a frequency of approximately 60 GHz, which has a relatively high extent of atmospheric attenuation. A preferred frequency range is 50-70 GHz. A more preferred frequency range is 55-65 GHz.

In other embodiments the frequency may be at other frequency ranges that are not within the range 50-70 GHz, but which are instead in the vicinity of other frequency values that display a relatively high extent of atmospheric attenuation. Preferred ranges include, for example, 22-24 GHz, 110-120 GHz, 170-190 GHz, 310-330 GHz, or more generally 50-330 GHz.

When more than one aircraft is to be provided with the above described data retrieval systems 1, then different aircraft may be allocated different frequencies for their respective data retrieval system wireless links. Optionally this may also be the case, in those embodiments with a wireless bridge, for their respective wireless bridge links 30. In some embodiments, use of 60GHz or higher frequencies offers a wide bandwidth so that multiple non interfering channels can be accommodated.

In the above embodiments, during flight, data is stored at the data storage module 14. In other embodiments, other apparatus may be provided in addition to the data storage module 14 and take part in the activity of storing the data. For example, one or more additional processors and/or one or more separate storage media may be used. In yet further embodiments, other apparatus may be used instead of the data storage module, for example other types of processors and/or other separate storage media. In those embodiments where more than one apparatus is used, one or more of them may be located in different parts of the aircraft compared to the others. Indeed, in yet further embodiments, all the relevant apparatus may be located in a region of the aircraft other than a bay or compartment that is electromagnetically sealed in its entirety, for example in one that is at least sealed relative to the outside of the aircraft even if not sealed relative to one or more other regions inside the aircraft.

In the above embodiments, different examples are provided of mechanisms for reducing the transmission loss that would occur if the data was transmitted out of the aircraft through the panel of the avionics bay (or other location in the aircraft) without such mechanisms being provided As described above, these mechanisms include for example transmitting from the undercarriage bay that will be opened when the aircraft is on the ground, or by providing a transmission element as described above. However, it is not essential to provide such a mechanism for reducing the transmission loss that would occur were the data transmitted out of the aircraft through the panel of the avionics bay (or other location in the aircraft), and in other embodiments no such mechanisms are provided, however use of a frequency in the range of 22-24 GHz or 50-330 GHz produces desired security advantages due to low transmission range in air.

More generally, apparatus, including the systems and modules described above, and other apparatus, including apparatus for implementing the above described processes, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

## Claims

1. An aircraft-side military aircraft data retrieval system, comprising:
a data storage device (14) located in a military aircraft (2) adapted to, during a flight, store data acquired during the flight; and
wireless apparatus (18) adapted to wirelessly transmit, after the aircraft (2) has landed, the stored data to a ground-side data retrieval system (6), at a frequency in a range selected from the following ranges: (i) 50-330 GHz, (ii) 22-24 GHz.

2. An aircraft-side military aircraft data retrieval system according to claim 1, wherein the frequency is in the range of 50-70 GHz.

3. An aircraft-side military aircraft data retrieval system according to claim 2, wherein the frequency is in the range of 55-65 GHz.

4. An aircraft-side military aircraft data retrieval system according to claim 1, wherein the frequency is in a range selected from the following ranges: (i) 50-70 GHz, (ii) 110-120 GHz, (iii) 170-190 GHz, (iv) 310-330 GHz, (v) 22-24 GHz.

5. An aircraft-side military aircraft data retrieval system according to any of claims 1 to 4, wherein the data storage device (14) is located in an electromagnetically sealed bay (8) of the aircraft (2).

6. An aircraft-side military aircraft data retrieval system according to any of claims 1 to 5, wherein the data storage device (14) is located in an avionics bay (8) of the aircraft (2).

7. An aircraft-side military aircraft data retrieval system according to any of claims 1 to 6, wherein:
the data storage device (14) is located in a first location (8) in the military aircraft (2);
the wireless apparatus (18) comprises an antenna (28), at least the antenna (28) being located in a second location (10) in the military aircraft (2) that is different to the first location (8);
the second location (10) is a location (10) that can have a closed or open configuration and which will be in the closed configuration for at least a majority of the flight and in the open configuration, for a purpose other than retrieving the stored data, after the aircraft (2) has landed; and
when the second location (10) is in the open configuration the second location (10) is less electromagnetically sealed than the first location (8).

8. An aircraft-side military aircraft data retrieval system according to any of claims 1 to 7, further comprising a transmission element (50) in an external panel (9) of the military aircraft (2); and wherein the wireless apparatus (18) is further adapted to wirelessly transmit the stored data to the ground-side data retrieval system (6) via the transmission element (50).

9. A ground-side military aircraft data retrieval system, comprising:
wireless apparatus (18) adapted to wirelessly receive, at a frequency in a range selected from the following ranges: (i) 50-330 GHz, (ii) 22-24 GHz, data acquired and stored by the aircraft (2) during flight and transmitted after landing by the aircraft (2) using an aircraft-side data retrieval system (4) according to any of claims 1 to 8.

10. A ground-side military aircraft data retrieval system according to claim 9, located in a hand-held terminal (26).

11. A ground-side military aircraft data retrieval system according to claim 9 or claim 10, further comprising an antenna probe head arrangement (75) adapted to capture the wireless transmission from the transmission element (50).

12. A military aircraft data retrieval system, comprising:
an aircraft-side military aircraft data retrieval system according to any of claims 1 to 8; and
a ground-side military aircraft data retrieval system according to any of claims 9 to 11.

13. An aircraft-side military aircraft data retrieval method, comprising:
during a flight by a military aircraft (2), storing data acquired during the flight in a data storage device (14) located in the military aircraft (2); and
after the aircraft (2) has landed, wirelessly transmitting the stored data to a ground-side data retrieval system (6), at a frequency in a range selected from the following ranges: (i) 50-330 GHz, (ii) 22-24 GHz.

14. A program or plurality of programs arranged such that when executed by a computer system or one or more processors it/they cause the computer system or the one or more processors to operate in accordance with the method of claim 13.

15. A machine readable storage medium storing a program or at least one of the plurality of programs according to claim 14.
